# DEMANDE DE BREVET EUROPEEN

(11) **EP 0 875 333 A1**
(43) Date de publication de la demande: **04.11.1998**
(21) Numéro de dépôt: 98400593.4
(22) Date de dépôt: 13.03.1998
(51) Int. Cl.: B23P 19/08

(54) **Dispositif pour équiper une tête de piston de moteur thermique d'un jeu de segments**

(30) Priorité: 24.03.1997 FR 9703550
(71) Demandeur: RENAULT AUTOMATION, 92109 Boulogne Billancourt (FR)
(72) Inventeur: Grare, Pierre, 91 420 Morangis (FR); Laigre, Claude, 77950 Rubelles (FR); Thurier, Yvan, 94320 Thiais (FR)
(74) Mandataire: Fernandez, Francis Lionel

(57) **Abrégé**

Dispositif pour équiper une tête de piston (3) de moteur thermique d'un jeu de segments comportant un puits (1) de segmentation définissant un espace cylindrique de réception de la tête de piston (3) dans lequel débouchent des gorges (2) périphériques étagées suivant l'axe de l'espace, chacune de ces gorges (2) étant destinée à recevoir un segment du jeu de segments, des moyens (4) de dilatation radiale des segments logés de manière amovible dans le puits (1) et des moyens d'amenée des segments dans les logements étagés, caractérisé en ce que ces moyens d'amenée comportent un dispositif (5) formé par des couloirs (5a, 5b, 5c) superposés débouchant dans les gorges (2) du puits et par un poussoir (6) monté à coulissement dans chacun des couloirs, chaque couloir possédant une ouverture latérale d'alimentation (8, 9, 10) qui le relie à un couloir adducteur (11, 12, 13) dans lequel repose le pied d'une pile (17, 18, 19) de segments, ce couloir adducteur possédant un poussoir coulissant (14, 15, 16) déplaçable depuis une position où il est situé au-delà du pied de la pile par rapport à l'ouverture latérale jusqu'à une position où il est situé à proximité de cette ouverture latérale.

## Description

La présente invention concerne un dispositif de montage d'un jeu de segments sur une tête de piston de moteur thermique.

Le document FR-A-2.630.952 décrit une machine de distribution et de pose de segments sur les pistons de moteurs thermiques. Cette machine utilise des moyens d'amenée, d'expansion, de centrage et de mise en place des segments dans les gorges parallèles usinées sur les têtes des pistons, la pose des segments s'effectuant un à un.

Le document FR-A-2.688.156 décrit un dispositif de montage simultané d'un jeu de segments sur une tête de piston de moteur thermique. Le dispositif comporte des moyens d'amenée et de centrage du jeu de segments par rapport à la tête du piston et des moyens d'expansion dudit jeu de segments disposés en coïncidence avec les gorges parallèles de la tête du piston. Les moyens d'amenée du jeu de segments sont formés par une pluralité de tiroirs superposés disposés en étoile, chaque tiroir comportant deux demi-tiroirs opposés qui délimitent, lorsqu'ils sont rapprochés, un logement de transport et de maintien en position d'un segment. Le dispositif comporte, du fait de sa structure et de sa géométrie, un grand nombre d'actionneurs (notamment des vérins) ce qui rend son coût élevé. En outre, les moyens d'amenée, répartis en étoile, encombrent l'environnement du poste et constituent une contrainte pour les autres équipements dont le poste doit être pourvu.

La présente invention se propose d'apporter une simplification importante à ce type de dispositifs en ce qui concerne notamment les moyens d'amenée du jeu de segments en regard des gorges de la tête du piston à équiper.

A cet effet, l'invention a pour objet un dispositif pour équiper une tête de piston de moteur thermique d'un jeu de segments comportant un puits de segmentation définissant un espace cylindrique de réception de la tête de piston dans lequel débouchent des gorges périphériques étagées suivant l'axe de l'espace, chacune de ces gorges étant destinée à recevoir un segment du jeu de segments, des moyens de dilatation radiale des segments logés de manière amovible dans le puits et des moyens d'amenée des segments dans les gorges étagées, ces moyens d'amenée comportant un dispositif formé par des couloirs parallèles superposés débouchant dans les gorges du puits et par un poussoir monté à coulissement dans chacun des couloirs, chaque couloir possédant une ouverture latérale d'alimentation qui le relie à un couloir adducteur dans lequel repose le pied d'une pile de segments, ce couloir adducteur possédant un poussoir coulissant déplaçable depuis une position où il est situé au-delà du pied de la pile par rapport à l'ouverture latérale jusqu'à une position où il est situé à proximité de cette ouverture latérale.

D'autres caractéristiques et avantages ressortiront de la description donnée ci-après à titre d'exemple d'un mode de réalisation de l'invention.

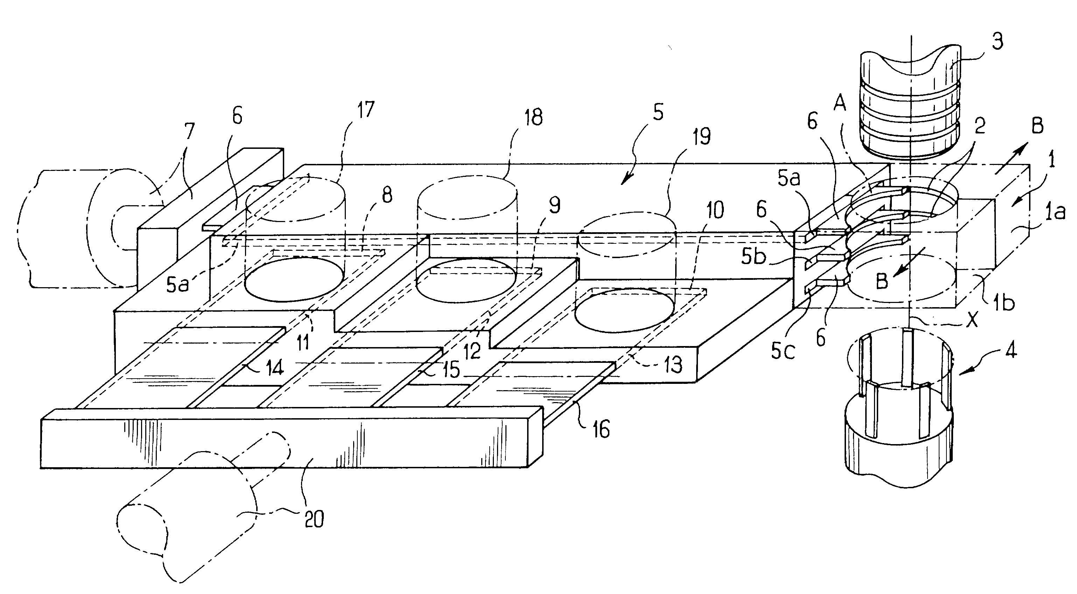

Il sera fait référence à la figure unique qui est un schéma en perspective simplifié du dispositif selon l'invention.

Un espace cylindrique A d'axe X forme, dans un bâti 1 un puits de segmentation pour recevoir dans des gorges 2 les segments, un piston 3 à équiper et des doigts d'expansion 4 destinés, de manière connue, à élargir (dilater radialement) les segments avant la pénétration du piston 3 dans le puits. les gorges 2 ouvertes sur l'espace A.

Les segments proviennent d'un dispositif d'amenée 5 qui comprend essentiellement autant de couloirs (5a, 5b, 5c) parallèles et superposés que de segments à installer. Le convoyeur 5 est réalisé de manière simple par un empilement de plaques et d'entretoises assemblé au moyen de vis non représentées. Entre les plaques, les entretoises définissent les dimensions de la section du couloir qui sont adaptées à celles du segment qu'il reçoit. Chaque couloir comporte un poussoir 6 coulissant et chaque poussoir 6 est attelé à un actionneur unique 7 qui assure leur coulissement simultané dans chaque tiroir entre une position d'attente située à gauche de la figure et la position représentée où les poussoirs 6 sont situés au voisinage du puits A.

Chaque couloir possède un accès latéral 8, 9, 10, auquel aboutit un couloir adducteur 11, 12, 13 perpendiculaire au couloir principal, chacun pourvu d'un poussoir secondaire 14, 15 et 16. Chacun de ces couloirs adducteurs est constitué de la même manière que ceux du convoyeur 5, c'est-à-dire par un jeu de plaques et d'entretoises superposées et s'étend jusqu'au couloir principal correspondant à partir d'un magasin 17, 18, 19 de segments dans lesquels les segments 5 sont empilés. Chaque poussoir est d'une épaisseur sensiblement égale à l'épaisseur du segment correspondant si bien que lorsqu'il s'éloigne de l'accès au couloir principal correspondant, il découvre une ouverture ménagée dans la paroi supérieure du couloir adducteur correspondant par laquelle un segment peut tomber dans le couloir. En approchant ensuite chaque poussoir adducteur de l'accès, on pousse le segment dans le couloir principal tout en maintenant la pile de segment sous laquelle glisse le poussoir. L'ensemble des poussoirs adducteurs est relié à un organe de manoeuvre unique 20.

L'amenée d'un jeu de segments au puits de segmentation s'opère de la manière suivante.

Les poussoirs principaux 6 sont déplacés vers la gauche de la figure découvrant les accès 8 à 10. Les poussoirs 14 à 16 sont tirés au-delà des piles 17 à 19. Chaque couloir adducteur est donc chargé d'un segment. Au moyen d'un actionneur unique 20, chaque poussoir 14 à 16 est déplacé en direction du convoyeur 5 pour loger le segment correspondant dans le couloir principal 5a, 5b, 5c, correspondant. Les poussoirs 14 à 16 sont ensuite dégagés et les poussoirs 6 déplacés vers le puits 1 avec l'actionneur unique 7. Chaque segment est alors pris en charge par le poussoir 6 correspondant au moment où celui-ci parvient au niveau de l'accès latéral correspondant. Du fait de l'alignement vertical des poussoirs 6, l'ensemble des segments parvient centré au niveau du puits 1. Les poussoirs du convoyeur ou des couloirs adducteurs peuvent être conformés en arc de cercle à leur extrémité au contact des segments.

Dans ce puits, les segments sont installés dans les gorges 2 appropriées qui conservent leur position relative et permettent l'action des doigts d'expansion 4 et la pénétration du piston. On notera que le puits A est réalisé dans un bâti 1 en au moins deux parties ouvrantes 1a et 1b (par exemple en s'écartant selon les flèches B) pour libérer les segments montés sur le piston des gorges 2 et ainsi permettre l'extraction du piston équipé de ses segments.

L'intérêt principal de cette invention réside dans la diminution du nombre des actionneurs mis en oeuvre et la rationalisation de l'architecture d'un dispositif de segmentation d'une tête de piston.

## Revendications

1. Dispositif pour équiper une tête de piston (3) de moteur thermique d'un jeu de segments comportant un puits de segmentation définissant un espace cylindrique (A) de réception de la tête de piston (3) dans lequel débouchent des gorges (2) périphériques étagées suivant l'axe (X) de l'espace, chacune de ces gorges (2) étant destinée à recevoir un segment du jeu de segments, des moyens (4) de dilatation radiale des segments logés de manière amovible dans le puits (1) et des moyens d'amenée des segments dans les gorges étagées, caractérisé en ce que ces moyens d'amenée comportent un dispositif (5) formé par des couloirs (5a, 5b, 5c) parallèles et superposés débouchant dans les gorges (2) du puits et par un poussoir (6) monté à coulissement dans chacun de ces couloirs, chaque couloir possédant une ouverture latérale d'alimentation (8, 9, 10) qui le relie à un couloir adducteur (11, 12, 13) dans lequel repose le pied d'une pile (17, 18, 19) de segments, ce couloir adducteur possédant un poussoir coulissant (14, 15, 16) déplaçable depuis une position où il est situé au-delà du pied de la pile par rapport à l'ouverture latérale jusqu'à une position où il est situé à proximité de cette ouverture latérale.

2. Dispositif selon la revendication 1, caractérisé en ce que les poussoirs (6) du convoyeur et les poussoirs (14, 15, 16) de chaque couloir adducteur sont réunis respectivement à un seul moyen d'actionnement (7, 20).

3. Dispositif selon l'une des revendications précédentes, caractérisé en ce que les couloirs ont une épaisseur sensiblement égale à celle du segment correspondant et une largeur sensiblement égale au diamètre extérieur de celui-ci.

4. Dispositif selon l'une des revendications précédentes, caractérisé en ce que l'extrémité de chaque poussoir en contact avec le segment correspondant est en arc de cercle de rayon au plus égal au rayon extérieur du segment.

5. Dispositif selon l'une des revendications précédentes, caractérisé en ce que le puits (A) de segmentation est réalisé dans un bâti (1) en au moins deux parties (1a, 1b) séparables l'une de l'autre.
